# EUROPÄISCHE PATENTSCHRIFT

(11) **EP 0 935 075 B1**
(45) Veröffentlichungstag und Bekanntmachung des Hinweises auf die Patenterteilung: **31.07.2002**
(21) Anmeldenummer: 98810092.1
(22) Anmeldetag: 09.02.1998
(51) Int. Cl.: F16B 5/02

(54) **Vorrichtung zum Befestigen eines Bauelementes in einem Abstand zu einem tragenden Bauteil**
Device for fastening an element at a distance to a carrying structure
Dispositif de fixation d'un élément de liaison à une distance sur une structure porteuse

(43) Veröffentlichungstag der Anmeldung: 11.08.1999
(73) Patentinhaber: Rogger, Marcel, 3257 Grossaffoltern (CH); Rogger, Adrian, 3250 Lyss (CH)
(72) Erfinder: Rogger, Marcel, 3257 Grossaffoltern (CH); Rogger, Adrian, 3250 Lyss (CH)
(74) Vertreter: Roshardt, Werner Alfred, Dipl.-Phys.

(56) Entgegenhaltungen:
- EP-A- 0 267 161
- DE-A- 3 715 420
- DE-U- 9 015 403
- US-A- 3 667 338

## Beschreibung

### Technisches Gebiet

Die Erfindung betrifft eine Vorrichtung zum Befestigen eines Bauelementes in einem Abstand zu einem tragenden Bauteil, umfassend einen Bolzen mit einem Gewinde an einem vorderen Ende des Bolzens und einem Befestigungsabschnitt mit einem gegenüber dem Gewinde grösseren Querschnitt.

### Stand der Technik

Aus der CH 614 761 ist eine Schraube zum Befestigen von Latten, Profilschienen, Platten oder Verkleidungselementen ohne zusätzliche Abstandselemente am tragenden Bauwerk bekannt. Die Schraube verfügt über zwei unterschiedlich dicke Gewinde mit gleicher Steigung. Das vordere, dünne Gewinde wird in einen im Bauwerk versetzten Dübel eingeschraubt, während sich das hintere, dicke Gewinde in das im Abstand befestigte Element einfrisst.

Um eine Durchsteckmontage zu ermöglichen, muss das hintere Gewinde einen grösseren Durchmesser haben als der für das vordere Gewinde bestimmte Dübel. Die Herstellung eines solchen Metallbolzens konventioneller Art ist relativ kostspielig. Dies namentlich dann, wenn die genannte Doppelschraube eine erhöhte Tragfähigkeit aufweisen sollte.

Aus der DE 37 15 420 A1 ist z. B. eine zweiteilig aufgebaute Distanzschraube zum Befestigen von Bauelementen (Latten etc.) im Abstand zu einem Bauwerk bekannt. Eine Hülse ist mit dem Kopfgewinde verdrehungsfest auf dem Bolzen angebracht, wobei die Hülse auf dem Bolzen axial verschiebbar sein kann. Beispielsweise weist die Hülse einen Innensechskant auf, welcher einen Aussensechskant des Bolzens mitnimmt. Das Gewinde an der Hülse kann auch erst nach dem Einsetzen der Distanzschraube in die zylindrische Bohrung der Hülse aufgewalzt werden.

Um Metallschrauben vor Korrosion zu schützen, ist die aus dem deutschen Gebrauchsmuster G 90 15 403.7 bekannte Metallschrauben mit einem isolierenden Mantel umgeben. Diese Schraube ist zum Fixieren von Isolationsmaterial auf Flachdächern bestimmt, wobei sie vom Isolationsmaterial vollständig isoliert ist. Der isolierende Mantel ist zur problemlosen Durchdringung einer bituminösen Schicht sowie zur Verankerung in dieser teilweise mit einem Aussengewinde versehen. Ein Element kann mit dieser Metallschraube nicht in einem Abstand zu einem Untergrund befestigt werden.

### Darstellung der Erfindung

Aufgabe der Erfindung ist es, eine Vorrichtung der eingangs genannten Art anzugeben, welche kostengünstig herstellbar, statisch belastbar und einfach montierbar ist.

Die Lösung der Aufgabe ist durch die Merkmale des Anspruchs 1 definiert. Gemäss der Erfindung ist der Befestigungsabschnitt durch einen mit dem Bolzen drehsicher verbundenen, aufgesetzten Mantelteil gebildet.

Anders als bei den bekannten Distanzschrauben sind bei der Erfindung der hintere und der vordere Abschnitt nicht einteilig aus einem Stück Material geformt. Vielmehr ist der dicke hintere Abschnitt durch einen angeformten Mantel aus einem Material gebildet, welches sich kostengünstig im gewünschten Durchmesser anbringen lässt. Damit ist die Türe für eine Vielzahl von Möglichkeiten aufgestossen, weil der Unterschied im Durchmesser (in verschiedenen Abschnitten) kein wesentlicher Kostenfaktor mehr ist.

Gemäss Anspruch 1 besteht der Mantel aus einem (z.B. faserverstärkten) Kunststoff. Er wird auf den Metallbolzen aufgespritzt.

An seiner Mantelfläche kann er mit einem Gewinde versehen sein, dessen Steigung mit derjenigen des dünnen, vorderen Gewindes korrespondiert. Zur Befestigung eines Metallprofils, einer Steinplatten oder dergleichen im gewünschten Abstand zum Bauwerk kann statt eines Gewindes auch eine andere funktionelle Form vorgesehen sein. Eine Alternative stellt insbesondere ein zylindrischer Abschnitt mit mindestens einer Nut oder Vertiefung für einen Sprengring dar. Selbstverständlich können auch mehrere Vertiefungen vorgesehen sein, so dass die Befestigung mit dem Halteelement (z.B. dem Sprengring) an einer gewünschten (von mehreren möglichen) Positionen erfolgen kann.

Zwischen dem vorderen und dem hinteren Gewinde ist vorzugsweise ein gewindefreier Abschnitt vorgesehen, welcher durch einen Mantel gegen Korrosion geschützt ist. Der gewindefreie Bereich des Bolzens befindet sich nach der Montage im Freiraum zwischen Bauwerk und Konstruktionselement. Wird die erfindungsgemässe Vorrichtung z.B. zur Befestigung einer Fassade verwendet, ist dieser Freiraum in der Regel korrodierenden Einflüssen unterworfen. Es ist deshalb vorteilhaft, diese Einflüsse durch einen Schutzmantel zu minimieren.

Der Schutzmantel kann am Bolzen selbst angebracht sein. Er kann eine Verlängerung des den Befestigungsabschnitt bildenden Kunststoffteils sein. Der Durchmesser des Schutzmantels ist kleiner als derjenige des Befestigungsabschnittes. Umfasst die Befestigungsvorrichtung einen Dübel (welcher im Mauerwerk versenkt wird und in welchen das vordere Gewinde des Bolzens eingeschraubt werden kann), dann ist die Länge des Schutzmantels so bemessen, dass im montierten Zustand Dübel und Schutzmantel einander überdecken oder zumindest berühren. Der Schutzmantel hat im übrigen eine Dicke, welche vorzugsweise geringer ist als diejenige des Dübels.

Gemäss einer besonders bevorzugten Ausführungsform der Erfindung weist der Dübel einen Anschlagbund (oder eine andere gleichwirkende Verbreiterung) auf, welche an der Oberfläche des Bauwerks anliegt und verhindert, dass der Dübel bei Belastung (oder bei der Montage) in unerwünschter Weise in das Bohrloch hineinkriechen kann. Mit anderen Worten: Der Dübel kann bereits bei der Montage in eine vordefinierte Position gebracht werden, welche er auch unter Belastung nicht verlassen kann.

Der Schutzmantel kann aber auch am Dübel ausgebildet sein. D.h. der Dübel ist so ausgebildet und wird derart montiert, dass er aus der Bohrung im Mauerwerk so weit herausragt, dass der im Zwischenraum (zwischen Bauwerk und Konstruktionselement) befindliche Teil des Bolzens im montierten Zustand umhüllt ist.

Zu beachten ist, dass bei der Erfindung der Aussendurchmesser des Dübels stets kleiner ist als derjenige des Befestigungsabschnittes. Ist am Befestigungsabschnitt ein Gewinde ausgebildet, muss der Dübel für die Durchsteckmontage auch kleiner als der Kerndurchmesser des genannten Gewindes sein. Der am Dübel ausgebildete Schutzmantel wird also nie durch die Bohrung des Konstruktionselement hindurch ragen.

Wird der massgebliche Durchmesser des Befestigungsabschnittes grösser als derjenige des Dübelbundes gewählt, dann kann eine besonders vorteilhafte Durchsteckmontage angewendet werden. Dabei kann die Bohrung im Bauwerk durch das Konstruktionselement hindurch angebracht werden. Die korrespondierende Bohrung im Konstruktionselement ist etwas grösser, so dass der Dübel samt Anschlagbund von aussen durch das Konstruktionselement hindurch in die Bohrung des Bauwerks eingeschoben werden kann. Weil die Bohrung im Bauwerk kleiner als der Anschlagbund ist, kann der Dübel blind in der gewünschten bzw. vorgegebenen Versenkungstiefe positioniert werden. Danach kann der Bolzen in den Dübel eingeschraubt werden. Die gleiche Steigung der beiden Gewinde stellt sicher, dass der vorgewählte Abstand zwischen Konstruktionselement und Bauwerk beim Einschrauben nicht verändert wird.

Die Vorteile der erfindungsgemässen Konstruktion des hinteren Teils des Bolzens kommen bei den für die Durchsteckmontage bestimmten Ausführungsformen voll zum Tragen, weil der Unterschied im Durchmesser zwischen dem vorderen und dem hinteren Gewinde besonders gross ist. Eine kostengünstige Herstellung grosser Durchmesserdifferenzen (von z.B. mehreren Millimetern) aus einem einteiligen Metalldorn ist nämlich kaum realisierbar.

Für bestimmte Anwendungen kann es von Vorteil sein, wenn vor dem hinteren Gewinde (z.B. am Übergang zwischen dem gewindefreien Abschnitt und dem hinteren Gewinde) eine Schikane ausgebildet ist, welche verhindert, dass das hintere Gewinde sich ohne Widerstand in das Konstruktionselement einschneiden kann. Die Schikane ist z.B. als Kragen ausgeführt, welcher einen etwas grösseren Durchmesser als der Kern des hinteren Gewindes hat. Die im Konstruktionselement angebrachte Bohrung soll zudem etwas kleiner als die Schikane sein. Beim Einschrauben des vorderen Gewindes in die Bohrung des Bauwerks kann das hintere Gewinde nicht ohne Widerstand in das Konstruktionselement nachgezogen werden. Die Schikane führt dazu, dass das Konstruktionselement zunächst gegen das Bauwerk gezogen wird, bis (z.B. von der Isolation zwischen Bauwerk und Konstruktionselement) ein hinreichend grosser Gegendruck aufgebaut worden ist und die Schikane unter Widerstand in die Bohrung des Konstruktionselement hineingedrückt werden kann. Sobald das hintere Gewinde in der genannten Bohrung Fuss fassen kann, findet die Fixierung unter Beibehaltung des Abstandes statt.

Der Schutzmantel kann an seiner Oberfläche eine Rippen/Rillen-Rasterung aufweisen, damit an der gewünschten Stelle z.B. ein Halteelement zum Anpressen einer isolierenden Platte an das Mauerwerk angebracht werden kann. Das Halteelement kann z.B. ein einseitig geschlitzter Ring sein, welcher in einer bezüglich des Bolzens radialen Richtung aufgesetzt werden kann.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung der Ausführungsbeispiele verwendeten Zeichnungen zeigen:
- Fig. 1a-d: Eine schematische Darstellung einer erfindungsgemässen Schraube;
- Fig. 2a, b: eine erfindungsgemässe Befestigung eines Konstruktionselementes in einem Abstand zum Bauwerk;
- Fig. 3a, b: eine erfindungsgemässe Befestigung, bei welcher das Konstruktionselement vor der Fixierung durch eine Schikane gegen das Bauwerk gepresst wird;
- Fig. 4a-c: eine schematische Darstellung einer Distanzschraube mit einer Rasterung und einer tellerförmigen Halterung.

Grundsätzlich sind in den Figuren gleiche Teile mit gleichen Bezugszeichen versehen.

### Wege zur Ausführung der Erfindung

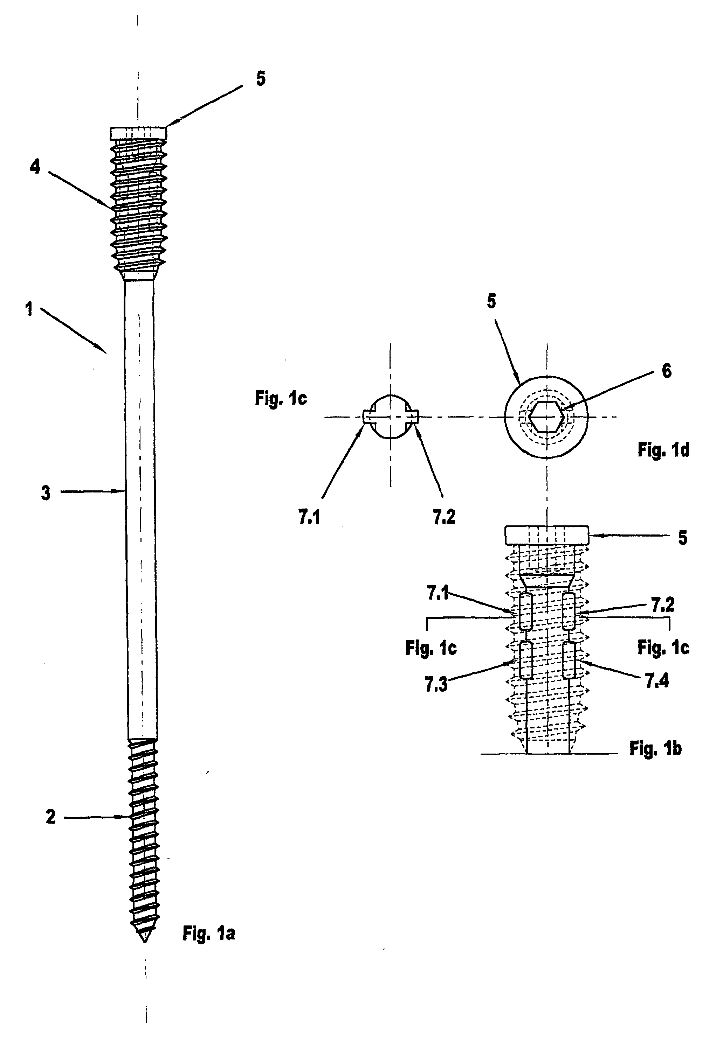

Fig. 1a-d zeigt eine erste Ausführungsform einer erfindungsgemässen Distanzschraube 1. Sie setzt sich aus einem Metallbolzen und einem Befestigungsabschnitt 4 aus Kunststoff zusammen. Der Metallbolzen weist an seinem vorderen Ende ein Gewinde 2 auf. Seine Länge entspricht der erforderlichen Einschraubtiefe im tragenden Bauwerk. Nach dem Gewinde 2 folgt ein gewindefreier Zwischenabschnitt 3. Sein Durchmesser ist gleich gross oder um eine Toleranz grösser als der Aussendurchmesser des Gewindes 2. Seine Länge korrespondiert mit dem zu überbrückenden Abstand zwischen Konstruktionselement und Bauwerk. In der Praxis werden für unterschiedliche Bedürfnisse Distanzschrauben mit unterschiedlich langen Zwischenabschnitten (aber im wesentlichen gleich langen Gewinden) zur Verfügung gestellt.

Am hinteren Ende ist gemäss der Erfindung der z.B. ebenfalls mit einem Gewinde ausgebildete Befestigungsabschnitt 4 vorgesehen. Er umschliesst den Metallbolzen in der Art eines Mantels. Um eine verdrehsichere Verbindung zu gewährleisten, sind am Metallbolzen z.B. vier Rippen 7.1 bis 7.4 ausgeformt. Im vorliegenden Beispiel befinden sich diese in der Nähe des Kopfes 5 und sind parallel zur Längsachse des Bolzens ausgerichtet. Zusätzlich oder alternativ zu den Rippen 7.1 bis 7.4 können Vertiefungen bzw. Rillen zum gleichen Zweck vorgesehen sein.

Die Rippen 7.1 bis 7.4 ragen nur geringfügig über den in diesem Abschnitt zylindrischen Querschnitt des Metallbolzens hinaus. Sie müssen problemlos von der vorgesehenen Dicke des Befestigungsabschnittes 4 aufgenommen werden können. In der Regel werden sie kleiner als der Kopf 5 sein. Der Kerndurchmesser des am Befestigungsabschnitt 4 angebrachten Gewindes 16 (vgl. 2a) ist typischerweise mehrere Millimeter (z.B. 4 mm oder mehr) grösser als der Durchmesser des ummantelten Metallbolzens. Da der Befestigungsabschnitt 4 aus Kunststoff ist und auf den Metallbolzen aufgespritzt wird, kann er im Prinzip beliebig dick sein, ohne dass der Herstellungsaufwand entsprechend in die Höhe getrieben wird.

Der Kopf 5 ist z.B. mit einem Innensechskant 6 versehen, damit die Schraube mit einem (vorzugsweise maschinell angetriebenen) Werkzeug eingeschraubt werden kann. Anstelle des Innensechskant 6 (welcher hier nur als Beispiel für einen Innenangriff im allgemeinen zu verstehen ist) kann auch ein Aussensechskant oder ein sonstiger geeigneter Angriff vorgesehen sein. Der Kopf 5 kann ohne weiteres in an sich bekannter Weise ausgebildet sein.

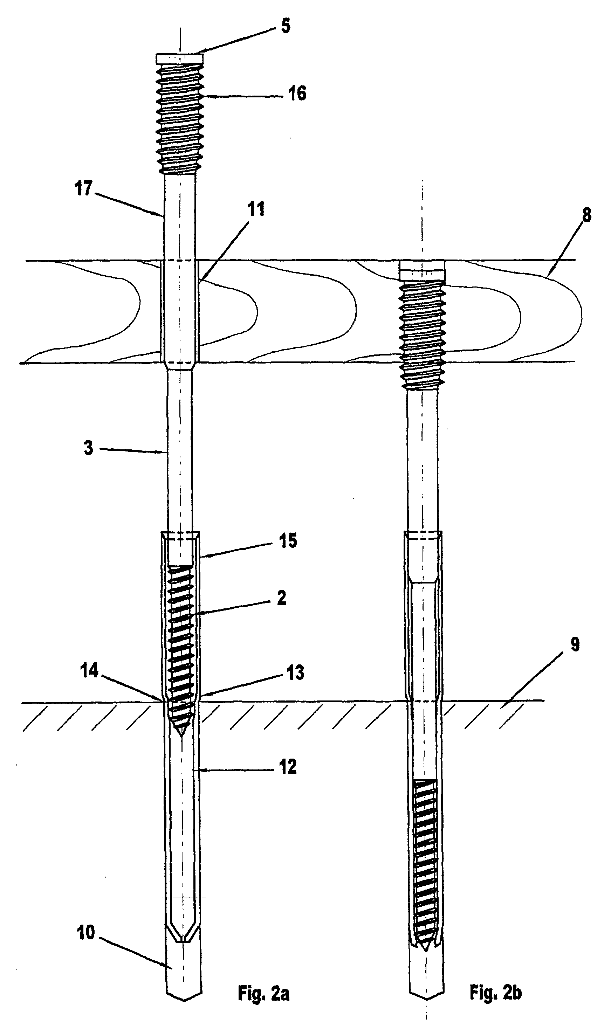

Fig. 2a, b veranschaulicht die erfindungsgemässe Befestigung eines Konstruktionselement 8 in einem Abstand zum Bauwerk 9. Das Konstruktionselement 8 kann zur Befestigung einer Fassade (insbesondere eines Sichtelementes, wie z.B. einer Holzplatte, Steinplatte etc.) oder einer im Abstand zum Fundament abzustützenden Bodenplatte dienen. Zu erwähnen ist auch die Befestigung von Elementenan Schrägdächern. Es sind also Montagen in allen Stellungen (vertikal, schräg, horizontal) möglich.

Vorgängig zur Montage wird das Konstruktionselement 8 im gewünschten Abstand positioniert. Mit einem Bohrer kann sodann ein Loch 10 in das Bauwerk 9 (Mauer) durch das Konstruktionselement 8 hindurch gebohrt werden. Die Bohrung 11 das Konstruktionselement 8 ist ausreichend gross, so dass ein Dübel 12 samt Anschlagbund durch sie hindurch in das Loch 10 eingeführt werden kann.

Bevor nun aber die Distanzschraube 1 eingeführt wird, wird der Dübel 12 auf die Spitze aufgestülpt bzw. auf das vordere Gewinde 2 leicht aufgeschraubt. (Ist der Dübel mit einer Einschlagsicherung versehen, dann ist zum Aufsetzen des Dübels keine Schraubbewegung erforderlich, was arbeitstechnisch natürlich von Vorteil ist.) Mit dem Dübel 12 voran wird die so vorbereitete Befestigungsvorrichtung durch die Bohrung 11 hindurch in das Loch 10 eingeschoben, bis der Anschlagbund 13 an der Kante 14 des Loches 10 anliegt. Der Anschlagbund 13 sorgt folglich dafür, dass der Dübel 12 genau in der erforderlichen Tiefe im Loch 10 versenkt positioniert werden kann (Fig. 2a).

Der in Fig. 2a, b gezeigte Dübel 12 hat anschliessend an den Anschlagbund 13 einen Schutzmantel 15. Er befindet sich im montierten Zustand ausserhalb des Loches 10 und ist dazu bestimmt, einen entsprechenden Teil der Distanzschraube 1 gegen Korrosion zu schützen. Seine Länge entspricht der zu schützenden Länge der Distanzschraube 1 und macht im vorliegenden Beispiel etwa die Hälfte der Gesamtlänge des Dübels 12 aus. In jedem Fall ist der Schutzmantel 15 kürzer als der kleinste, von der Distanzschraube 1 zu überbrückende Abstand zwischen Konstruktionselement 8 und Bauwerk 9.

An der Distanzschraube kann eine Markierung angebracht sein, welche erkennen lässt, ob die Schraube die richtige Länge für die zu überbrückende Distanz aufweist. Diese Markierung ist typischerweise im hinteren Bereich des Zwischenabschnittes angebracht und zwar derart, dass sie bei mit dem Dübel durch das Konstruktionselement 8 hindurch in das Loch 10 eingesetzter Distanzschraube (vor dem Einschrauben) gerade noch an der Aussenseite des Konstruktionselements 8 sichtbar ist. Ist die Markierung in der in Fig. 2a gezeigten Montagestellung nicht mehr sichtbar, dann bedeutet dies, dass die Distanzschraube zu kurz ist. Umgekehrt weiss der Anwender, dass die Distanzschraube zu lang ist, wenn die Markierung vollständig ausserhalb des Konstruktionselements 8 ist.

Der Befestigungsabschnitt 4 mit seinem Gewinde 16 befindet sich noch vollständig ausserhalb der Bohrung 11. Es ist zu beachten, dass im vorliegenden Beispiel die Distanzschraube 1 ebenfalls einen Schutzmantel 17 aus Kunststoff aufweist. Er ist in einem Stück mit dem Befestigungsabschnitt 4 gebildet und deckt beispielsweise die hintere Hälfte des Zwischenabschnittes 3 ab. Sein Querschnitt ist geringer als der Kerndurchmesser des Gewindes 16 (auf den Boden des Gewindeganges bezogener Durchmesser). Der Übergang zwischen dem dickeren Befestigungsabschnitt 4 und dem dünneren Schutzmantel 17 kann kontinuierlich sein. Vorzugsweise ist das Gewinde 16 im Übergangsbereich von hinten nach vorn sanft verjüngt.

Beim nun folgenden Einschrauben der Distanzschraube 1 bewegt sich zunächst das vordere Gewinde 2 in den Dübel 12. Nach einem kurzen Vorschub kommt der verjüngte Teil des Gewindes 16 in die Bohrung 11. Dabei schneidet er sich in das Konstruktionselement 8. Die Verjüngung wirkt sich vorteilhaft hinsichtlich einer sukzessiven Verdrängung des Materials aus. Weil das vordere und das hintere Gewinde 2 bzw. 16 dieselbe Steigung haben, wird der Abstand zwischen Konstruktionselement 8 und Bauwerk 9 beim Einschrauben in an sich bekannter Weise nicht verändert.

Ist die Distanzschraube 1 vollständig eingeschraubt (vgl. Fig. 2b), hat sich der Schutzmantel 17 mit seinem vorderen Ende in den Schutzmantel 15 des Dübels 12 eingefügt. Der metallische Kern der Distanzschraube 1 ist folglich im Zwischenraum zwischen Konstruktionselement 8 und Bauwerk 9 vollständig vom Kunststoff umhüllt (z.B. je etwa zur Hälfte vom Schutzmantel 17 einerseits und vom Schutzmantel 15 andererseits). Korrosive Einflüsse können auf diese Weise ferngehalten werden.

Auf den Schutzmantel 15 am Dübel 12 kann im Prinzip verzichtet werden. Der auf der Distanzschraube angebrachte Schutzmantel 17 kann sich über die ganze Länge des gewindefreien Zwischenabschnittes 3 erstrecken. Kommt dem Korrosionsschutz keine besondere Bedeutung zu, kann auch insgesamt auf einen Schutzmantel in diesem Bereich verzichtet werden.

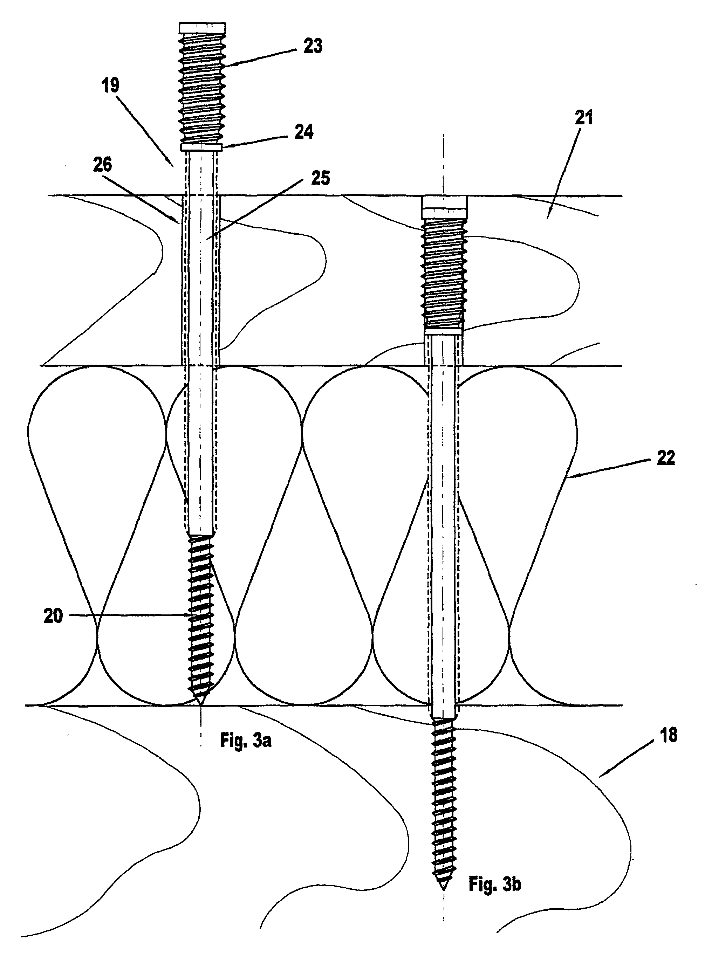

Wie die Figuren 3a, b zeigen, ist die Verwendung eines Dübels für die Erfindung nicht zwingend. Besteht der Träger 18 z.B. aus Holz, dann kann das vordere Gewinde 20 der Distanzschraube 19 als Holzschraubengewinde ausgeführt sein, welches direkt (d.h. ohne Vorbohrung) in den Träger 18 eingeschraubt werden kann.

Im vorliegenden Beispiel ist zwischen Konstruktionselement 21 und Träger 18 eine Isolation 22 vorgesehen. Diese ist in der Regel kompressibel. Gemäss einer besonders bevorzugten Ausführungsform hat die Distanzschraube 19 am vorderen (d.h. dem Gewinde 20 zugewandten) Ende eine Schikane 24. Diese hat z.B. die Form eines Rings bzw. Kragens, dessen Aussendurchmesser zwar grösser als der Kerndurchmesser aber kleiner als der Aussendurchmesser des Gewindes des Befestigungsabschnittes 23 ist.

Wird die Distanzschraube 19 durch die Bohrung 26 im Konstruktionselement 21 hindurch auf dem Träger 18 aufgesetzt und in diesen eingeschraubt, dann kommt - nach einem bestimmten Vorschub - zunächst die Schikane 24 an die Kante der Bohrung 26. Weil sie einen grösseren Durchmesser als die vorbereitete Bohrung 26 hat, wird - beim weiteren Eindrehen des Gewindes 20 in dem Träger 18 - zunächst das Konstruktionselement 21 gegen den Träger 18 gezogen. Dabei wird die kompressible Isolation 22 zusammengedrückt. Je weiter die Distanzschraube im Träger 18 eingeschraubt wird, desto stärker ist die Kompression und entsprechend der Gegendruck auf das Konstruktionselement 21. Hat der Gegenzug ein bestimmtes Mass erreicht, gibt das Material des Konstruktionselementes 21 am Rand der Bohrung 26 nach und die Schikane 24 dringt in die Bohrung 26 ein. Sobald das Gewinde des Befestigungsabschnitt 23 sich ebenfalls in die Bohrung 26 einfrisst, wird das Konstruktionselement 21 in der gegenwärtigen Position fixiert. Beim weiteren Eindrehen der Distanzschraube 19 hat die Schikane 24 keine Funktion mehr (sie wird einfach durch die Bohrung 26 hindurchgetrieben). Fig. 3b zeigt die Stellung der Distanzschraube 19 im fertig eingeschraubten Zustand.

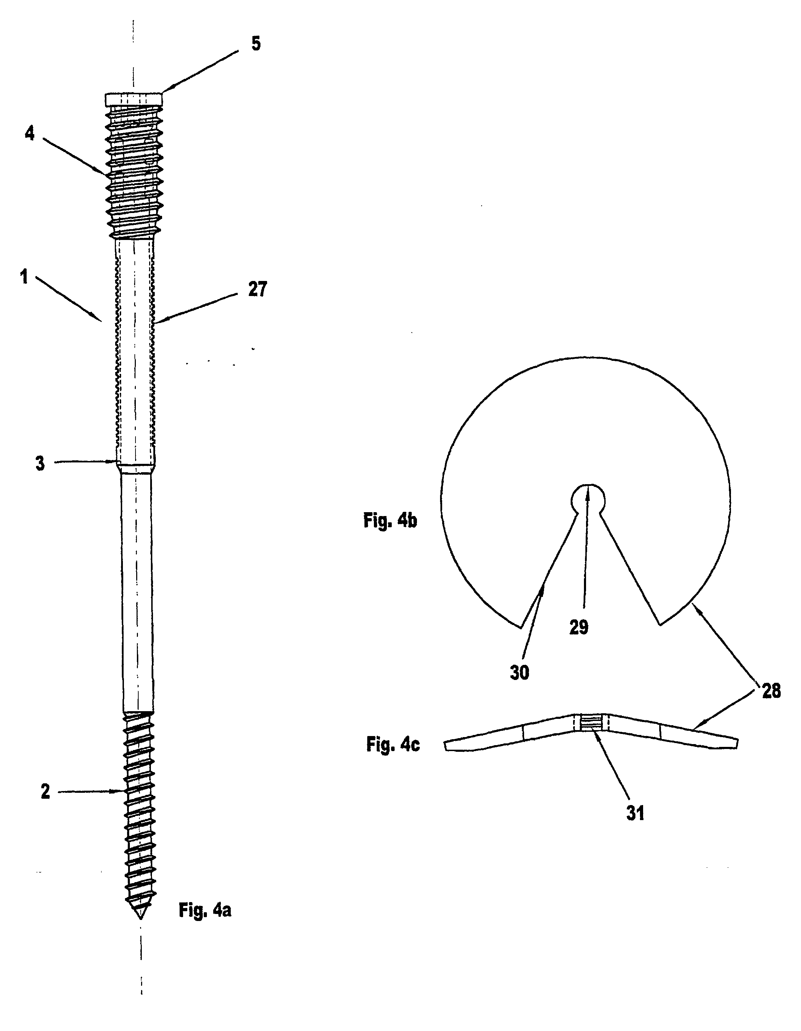

In Fig. 4a ist ein optionales Merkmal dargestellt, welches namentlich dann zur Anwendung kommen kann, wenn z.B. eine Isolationsplatte im Zwischenraum zwischen Träger 18 und Konstruktionselement 21 zu fixieren ist. Es handelt sich dabei um ein Rasterrelief 27, welches am Zwischenabschnitt 3 ausgebildet ist. Es dient zur Fixierung eines Anschlagoder Halteelementes zur niveaugerechten Montage der Konstruktionselemente. Das Rasterrelief 27 kann z.B. eine umlaufende Rippen/Rillen-Struktur, eine Zahnstruktur oder eine andere form- oder kraftschlussfähige Oberfläche sein, welche eine axiale Positionierung des Anschlagelementes sicherstellt.

Fig. 4b, c zeigt beispielhaft ein Anschlagelement 28, welches die Form eines Tellers mit einer zentralen Ausnehmung 29 (entsprechend dem Durchmesser des Zwischenabschnittes) und einen radialen Schlitz 30 von der Peripherie bis zur genannten zentralen Ausnehmung 29 hat. Aufgrund des Schlitzes 30 kann das Anschlagelement 28 in einer bezüglich der Distanzschraube radialen Richtung auf den Zwischenabschnitt bzw. das Rasterrelief 27 aufgesetzt werden. An der Innenwand der Ausnehmung 29 ist ebenfalls ein Rasterrelief 31 vorgesehen, welches mit dem Rasterrelief 27 an der Distanzschraube zusammenwirken kann.

Vorzugsweise ist das Rasterrelief 27 (welches z.B. auch durch eine rauhe Oberfläche gebildet sein kann) auf einem Schutzmantelteil der Distanzschraube 19 ausgebildet. Das Anschlagelement wird mit Vorteil aus Kunststoff bestehen. Ein Metallgebilde ist aber durchaus nicht ausgeschlossen.

Die Erfindung beschränkt sich nicht auf die gezeigten Ausführungsbeispiele. Im folgenden sollen einige Variationsmöglichkeiten angedeutet werden.

Der Befestigungsabschnitt muss nicht zwingend mit einem Gewinde ausgerüstet sein. Zur Montage einer Profilschiene aus Metall kann er beispielsweise eine gewindefreie zylindrische Form mit einer Ringnut für einen Sprengring haben. Gemäss der Erfindung ist der Querschnitt des Befestigungsabschnittes jedenfalls wesentlich grösser als der Zwischenabschnitt und das vordere Gewinde. Der Durchmesser der Bohrung in der Profilschiene entspricht demjenigen des Befestigungsabschnittes. Nach dem Einschrauben der Distanzschraube in den Träger wird der Sprengring in die Ringnut eingesetzt, derart dass die Profilschiene zwischen dem Schraubenkopf und dem Sprengring fixiert ist.

Die verdrehsichere Verbindung zwischen Mantel und Kern kann auch in anderer Weise als in Fig. 1b gezeigt realisiert werden. Anstelle von Rippen können Noppen oder Dorne vorgesehen sein. Eine ähnliche Wirkung könnte ein Aussenvierkant oder eine nichtrotationssymmetrische Form entfalten. Je nach Art der verwendeten Materialien kann u.U. auch ein Klebstoff zur Anwendung kommen.

Der Anschlagbund des Dübels kann in irgendeiner geeigneten Weise ausgeführt sein. Seine Funktion besteht darin zu verhindern, dass der Dübel bei Belastung weiter in das Bohrloch eindringen kann. Anstelle eines umlaufenden Kragens kann also beispielsweise eine Mehrzahl vom radial vorstehenden Noppen vorgesehen sein. Der radiale Überstand darf aber nicht grösser sein als der Kerndurchmesser des Befestigungsabschnittes, weil sonst eine Durchsteckmontage unmöglich ist.

Bei der Ausführungsform gemäss Fig. 1 folgt auf den Anschlagbund ein Schutzmantel. Dieser kann eine beliebige Länge haben. Er kann auch ohne weiteres weggelassen werden. Der Dübel endet dann in konventioneller Weise mit dem Anschlagbund.

Dadurch, dass das vordere und das hintere Gewinde der Distanzschraube dieselbe Steigung haben, können mehrere solche Schrauben unmittelbar nebeneinander (erforderlichenfalls sogar leicht schräg zueinander) eingeschraubt werden. Bei einer leichten Schrägstellung erhöht sich die Stabilität der Verbindung zwischen Konstruktionselement und Bauwerk. Es soll aber nicht ausgeschlossen werden, dass in gewissen Fällen eine unterschiedliche Steigung der Gewinde vorteilhaft sein kann. Auch bei solchen Spezialanwendungen kann die Erfindung zum Einsatz kommen.

Die erfindungsgemässe Konstruktion ermöglicht es, Distanzschrauben und ähnliche Befestigungsmittel in rationeller Weise zu produzieren, selbst wenn auf verschiedenen axialen Abschnitten stark unterschiedliche Durchmesser verlangt sind. Entsprechend können Befestigungsmittel mit grosser radialer Biegebelastbarkeit zu angemessenen Preisen hergestellt werden.

Befestigungen mit erfindungsgemässen Distanzschrauben können ohne Probleme für höhere Belastungen ausgelegt werden. Der Kunststoffdübel wird über das vordere Ende der Schraube gestülpt und kann anschliessend durch das bereits vorgebohrte Loch in der Latte oder dergleichen in den festen Untergrund eingeführt werden. Der dickere Teil des zweiten Gewindes kann im Durchmesser ausreichend gross bemessen werden, so dass auch Dübel mit Anschlagbund im Durchsteckverfahren eingesetzt werden können. Infolgedessen ist ein richtiges Positionieren des gesamten Bolzens möglich und es kann eine sichere Verankerung im festen Untergrund gewährleistet werden. Selbst während des Annagelns von Bekleidungen oder beim Auftreten sonstiger axialer Kräfte ändert sich der Abstand zwischen dem abdeckenden Bauelement und dem Bauwerk nicht.

Schrauben sind Massenartikel, die dem Markt kostengünstig zur Verfügung stehen müssen. Gewindebolzen werden daher meistens aus normalem "Eisendraht" fabriziert und galvanisiert. Kondenswasser, Umwelteinflüsse und vorallem handelsübliche Isolationen, die je nach Beschaffenheit gewisse Chemikalien enthalten, sind normalem "Eisendraht" feindlich gesinnt und führen zu Korrosion. Die erfindungsgemässe Ummantelung schafft hier Abhilfe. Die Verwendung von teuren Edelmetallen bzw. nicht-rostenden Stählen ist nicht erforderlich.

Unzählige Neu- und Altbauten werden heutzutage mit Isolationen jeglicher Art vom Fundament bis zum First eingepackt. Gross dimensionierte Metallträger wie z.B. Konsolen werden am Baukörper befestigt, damit auf Abstand Tragkonstruktionen für Verkleidungen montiert wirken können. Beim Montagevorgang müssen diese Metallkonsolen beim Stand der Technik auf aufwendige Weise vor dem Festschrauben genauestens vermessen werden, damit die Isolationsplatten nachträglich verlegt werden können. Dieser Aufwand kann bei der Verwendung der erfindungsgemässen Befestigungsmittel vermieden werden. Ferner werden auch die durch die bekannten Konsolen bedingten isolationsmässigen Schwachpunkte (Kältebrücken, Schallbrücken) vermieden.

Zusammenfassend ist festzustellen, dass die erfindungsgemässe Befestigungsvorrichtung vielseitig und einfach anwendbar ist. Ferner ist sie mit guter Qualität kostengünstig herstellbar.

## Patentansprüche

1. Vorrichtung zum Befestigen eines Bauelementes (8) in einem Abstand zu einem tragenden Bauteil (9), umfassend einen Bolzen mit einem Gewinde (2) an einem vorderen Ende des Bolzens und einem Befestigungsabschnitt (4) mit einem gegenüber dem Gewinde (2) grösseren Querschnitt, **dadurch gekennzeichnet, dass** der Befestigungsabschnitt (4) durch einen mit dem Bolzen drehsicher verbundenen, aufgesetzten Mantelteil aus aufgespritztem Kunststoff gebildet ist.

2. Vorrichtung nach Anspruch 1, **dadurch gekennzeichnet, dass** der Befestigungsabschnitt (4) ein Gewinde (16) mit einem Kerndurchmesser aufweist, welcher grösser als ein Aussendurchmesser des Gewindes (2) am vorderen Ende ist.

3. Vorrichtung nach einem der Ansprüche 1 oder 2, **dadurch gekennzeichnet, dass** der Befestigungsabschnitt (4) eine gewindefreie zylindrische Oberfläche und mindestens eine Vertiefung für ein Halteelement, insbesondere für einen Sprengring aufweist.

4. Vorrichtung nach einem der Ansprüche 1 bis 3, **dadurch gekennzeichnet, dass** ein Zwischenabschnitt (3) zwischen dem vorderen Gewinde (2) und dem Befestigungsabschnitt (4) einen Schutzmantel (17) aufweist, dessen Aussendurchmesser kleiner als derjenige des Befestigungsabschnittes (4) und grösser als derjenige des vorderen Gewindes (2) ist.

5. Vorrichtung nach einem der Ansprüche 1 bis 4, **dadurch gekennzeichnet, dass** sie einen Dübel (12) mit einem radial nach aussen stehenden Anschlagelement (13) umfasst, wobei der Befestigungsabschnitt (4) im Querschnitt grösser als die Querabmessung des Anschlagelementes (13) ist.

6. Vorrichtung nach Anspruch 5, **dadurch gekennzeichnet, dass** der Dübel (12) durch einen Schutzmantel (15) in axialer Richtung über das Anschlagelement (13) hinaus verlängert ist.

7. Vorrichtung nach einem der Ansprüche 1, 2 oder 4 bis 6, **dadurch gekennzeichnet, dass** zwischen dem Befestigungsabschnitt (23) und dem Zwischenabschnitt (25) eine Schikane (24) ausgebildet ist, welche bewirkt, dass das Bauelement (8) bei der Montage an das Bauteil (9) gedrückt wird.

8. Vorrichtung nach einem der Ansprüche 1 bis 7, **dadurch gekennzeichnet, dass** am Zwischenabschnitt ein Rasterrelief (27) ausgebildet ist, derart, dass an einer gewünschten Stelle ein Halteelement angebracht werden kann.

## Claims

1. Device for fastening a construction element (8), at a distance, to a supporting structural member (9), the device including a bolt with a thread (2) on a front end of the bolt and a fastening portion (4) with a larger cross-section than the thread (2), **characterized in that** the fastening portion (4) is formed by an attached shell portion of injection-moulded plastics material connected to the bolt in a rotationally fixed manner.

2. Device according to Claim 1, **characterized in that** the fastening portion (4) comprises a thread (16) with a core diameter which is larger than an outside diameter of the thread (2) on the front end.

3. Device according to any one of Claims 1 and 2, **characterized in that** the fastening portion (4) comprises a cylindrical surface without a thread and at least one recess for a retaining element, in particular for a retaining ring.

4. Device according to any one of Claims 1 to 3, **characterized in that** an intermediate portion (3) between the front thread (2) and the fastening portion (4) comprises a protective shell (17) the outside diameter of which is smaller than that of the fastening portion (4) and larger than that of the front thread (2).

5. Device according to any one of Claims 1 to 4, **characterized in that** it includes a dowel (12) with a radially outwardly projecting stop element (13), the fastening portion (4) being larger in cross-section than the transverse dimension of the stop element (13).

6. Device according to Claim 5, **characterized in that** the dowel (12) is extended beyond the stop element (13) in an axial direction by a protective shell (15).

7. Device according to any one of Claims 1, 2 or 4 to 6, **characterized in that** an obstacle (24) is formed between the fastening portion (23) and the intermediate portion (25), and causes the construction element (8) to be pressed against the structural member (9) during mounting.

8. Device according to any one of Claims 1 to 7, **characterized in that** a relief pattern (27) is formed on the intermediate portion in a manner such that a retaining element can be mounted in a desired position.

## Revendications

1. Dispositif pour fixer un élément de construction (8) dans une pièce de construction porteuse (9), comprenant un boulon comportant un filetage (2) sur son extrémité avant, et une partie de fixation (4) possédant une section transversale d'une taille supérieure au filetage (2), **caractérisé en ce que** la partie de fixation (4) est formée par une partie enveloppe emmanchée formée d'une matière plastique moulée par injection et qui est reliée d'une manière bloquée en rotation au boulon.

2. Dispositif selon la revendication 1, **caractérisé en ce que** la partie de fixation (4) comporte un filetage (16) comportant un diamètre de noyau qui est supérieur à un diamètre extérieur du filetage (2) sur l'extrémité avant.

3. Dispositif selon l'une des revendications 1 ou 2, **caractérisé en ce que** la partie de fixation (4) possède une surface cylindrique non filetée et au moins un renfoncement pour un élément de retenue, notamment pour un circlip.

4. Dispositif selon l'une des revendications 1 à 3, **caractérisé en ce qu'**une partie intermédiaire (3) située entre le filetage avant (2) et la partie de fixation (4) comporte une enveloppe de protection (17), dont le diamètre est inférieur à celui de la section de fixation (4) et est supérieur à celui du filetage avant (2).

5. Dispositif selon l'une des revendications 1 à 4, **caractérisé en ce qu'**il comporte une cheville (12) comportant un élément de butée (13) qui fait saillie radialement vers l'extérieur, la partie de fixation (4) ayant une taille en coupe transversale supérieure à la dimension transversale de l'élément de butée (13).

6. Dispositif selon la revendication 5, **caractérisé en ce que** la cheville (12) est prolongée par une enveloppe de protection (15) dans la direction axiale, au-delà de l'élément de butée (13).

7. Dispositif selon l'une des revendications 1, 2 ou 4 à 6, **caractérisé en ce qu'**entre la partie de fixation (23) et la partie intermédiaire (25) est formée une chicane (24), qui agit de telle sorte que l'élément de construction (8) est serré, lors du montage, contre la pièce de construction (9).

8. Dispositif selon l'une des revendications 1 à 7, **caractérisé en ce qu'**un relief d'encliquetage (27) est formé dans la partie intermédiaire de telle sorte qu'un élément de retenue peut être monté en un emplacement désiré.
